(19) Europäisches Patentamt
European Patent Office
Office européen des brevets

(11) **EP 4 324 791 A1**

(12) **EUROPEAN PATENT APPLICATION**
published in accordance with Art. 153(4) EPC

(43) Date of publication:
**21.02.2024 Bulletin 2024/08**

(21) Application number: **21937040.0**

(22) Date of filing: **17.12.2021**

(51) International Patent Classification (IPC):
**C01B 35/10** (2006.01)    **H01M 4/62** (2006.01)
**H01B 1/06** (2006.01)    **H01B 1/08** (2006.01)
**H01M 6/18** (2006.01)    **H01M 10/0562** (2010.01)
**H01M 10/0585** (2010.01)

(52) Cooperative Patent Classification (CPC):
**C01B 35/10; H01B 1/06; H01B 1/08; H01M 4/62;
H01M 6/18; H01M 10/0562; H01M 10/0585;
Y02E 60/10**

(86) International application number:
**PCT/JP2021/046672**

(87) International publication number:
**WO 2022/219847 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.04.2021   JP 2021068994**

(71) Applicant: **Panasonic Intellectual Property
Management Co., Ltd.
Kadoma-shi, Osaka 571-0057 (JP)**

(72) Inventors:
- **NARUSE, Takuya
  Kadoma-shi Osaka 571-0057 (JP)**
- **YOKOYAMA, Tomoyasu
  Kadoma-shi Osaka 571-0057 (JP)**

(74) Representative: **Grünecker Patent- und
Rechtsanwälte
PartG mbB
Leopoldstraße 4
80802 München (DE)**

(54) **SOLID ELECTROLYTE MATERIAL AND BATTERY USING SAME**

(57)    The solid electrolyte material of the present disclosure includes Li, La, O, X, and a hydride. X is at least one selected from the group consisting of F, Cl, Br, and I. The battery 1000 of the present disclosure includes a positive electrode 201, a negative electrode 203, and an electrolyte layer 202. The electrolyte layer 202 is disposed between the positive electrode 201 and the negative electrode 203. At least one selected from the group consisting of the positive electrode 201, the negative electrode 203, and the electrolyte layer 202 contains the solid electrolyte material of the present disclosure.

FIG. 1

**Description**

Technical Field

The present disclosure relates to a solid electrolyte material and a battery using the same.

Background Art

PTL 1 discloses a lithium ion-conductive solid electrolyte material constituted of Li, La, O, and X and an all-solid-state battery using the material. Here, X is at least one element selected from the group consisting of Cl, Br, and I.

Citation List

Patent Literature

PTL 1: International Publication No. WO 2020/137043

Summary of Invention

Technical Problem

It is an object of the present disclosure to provide a solid electrolyte material suitable for improving lithium ion conductivity.

Solution to Problem

The solid electrolyte material of the present disclosure includes Li, La, O, X, and a hydride, wherein the X is at least one selected from the group consisting of F, Cl, Br, and I. Advantageous Effects of Invention
The present disclosure provides a solid electrolyte material suitable for improving lithium ion conductivity.

Brief Description of Drawings

[Fig. 1] Fig. 1 shows a cross-sectional view of a battery 1000 according to a second embodiment.
[Fig. 2] Fig. 2 is a cross-sectional view of an electrode material 1100 according to the second embodiment.
[Fig. 3] Fig. 3 shows a schematic diagram of a compression molding dies 300 used for evaluation of the ion conductivity of a solid electrolyte material.
[Fig. 4] Fig. 4 is a graph showing a cole-cole plot obtained by impedance measurement of a solid electrolyte material of Example 1.
[Fig. 5] Fig. 5 is a graph showing the initial charge and discharge characteristics of a battery of Example 1.
[Fig. 6] Fig. 6 is a graph showing X-ray diffraction patterns of solid electrolyte materials of Examples 1 to 5 and Comparative Example 1.

Description of Embodiments

Embodiments of the present disclosure will now be described with referent to the drawings. The present disclosure is not limited to the following embodiments.

(First embodiment)

The solid electrolyte material according to a first embodiment includes Li, La, O, X, and a hydride. X is at least one selected from the group consisting of F, Cl, Br, and I.
The solid electrolyte material according to the first embodiment is a solid electrolyte material suitable for improving lithium ion conductivity. The solid electrolyte material according to the first embodiment can have, for example, practical lithium ion conductivity and can have, for example, high lithium ion conductivity. Here, high lithium ion conductivity is, for example, greater than or equal to $3 \times 10^{-5}$ S/cm at around room temperature (e.g., 25°C). That is, the solid electrolyte material according to the first embodiment can have, for example, an ion conductivity of greater than or equal to 3 × 10⁻⁵ S/cm.

The solid electrolyte material according to the first embodiment can be used for obtaining a battery with excellent charge and discharge characteristics. An example of the battery is an all-solid-state battery. The all-solid-state battery may be a primary battery or a secondary battery.

The solid electrolyte material according to the first embodiment does not substantially contain sulfur. The fact that the solid electrolyte material according to the first embodiment does not substantially contain sulfur means that the solid electrolyte material does not contain sulfur as a constitutional element, except for sulfur inevitably mixed as an impurity. In this case, the amount of sulfur as an impurity mixed in the solid electrolyte material is, for example, less than or equal to 1 mol%. The solid electrolyte material according to the first embodiment does not contain sulfur. A solid electrolyte material not containing sulfur does not generate hydrogen sulfide, even if it is exposed to the atmosphere, and is therefore excellent in safety. The sulfide solid electrolyte disclosed in PTL 1 may generate hydrogen sulfide when exposed to the atmosphere.

In order to enhance the ion conductivity of a solid electrolyte material, the solid electrolyte material according to the first embodiment may consist essentially of Li, La, O, X, and a hydride. Here, the fact that "the solid electrolyte material according to the first embodiment consists essentially of Li, La, O, X, and a hydride" means that the proportion of the total amount of Li, La, O, X, and a hydride to the total amount of all elements constituting the solid electrolyte material according to the first embodiment is greater than or equal to 90%. As an example, the molar proportion may be greater than or equal to 95%.

In order to enhance the ion conductivity of a solid electrolyte material, the solid electrolyte material according to the first embodiment may consist of Li, La, O, X, and a hydride only.

The solid electrolyte material according to the first embodiment may contain inevitably mixed elements. An example of the element is nitrogen. Such an element may be present in the raw material powders of the solid electrolyte material or in the atmosphere for manufacturing or storing the solid electrolyte material. The amount of the elements inevitably mixed in the solid electrolyte material according to the first embodiment as described above is, for example, less than or equal to 1 mol%.

The solid electrolyte material according to the first embodiment further includes a hydride in addition to Li, La, O, and X. For example, when the hydride is an ionic hydride including an anion, it is inferred that the interaction of the anion with Li⁺ is weak compared to that of a halide ion such as I⁻. Accordingly, it is inferred that since the hydride is unlikely to restrict Li⁺ and thereby Li⁺ easily conducts, the solid electrolyte material according to the first embodiment can improve the lithium ion conductivity.

In the solid electrolyte material according to the first embodiment, the ratio of the amount of O to the total amount of X and the hydride may be less than 1. Such a solid electrolyte material has improved lithium ion conductivity. For example, in the solid electrolyte material according to the first embodiment, when X includes I and the hydride includes a borohydride compound including $BH_4^-$, the ratio of the amount of O to the total amount of I and the borohydride compound including $BH_4^-$ may be less than 1.

In order to improve the ion conductivity of the solid electrolyte material according to the first embodiment, the ratio of the amount of Li to the amount of La may be greater than or equal to 0.75 and less than or equal to 2.0.

In the solid electrolyte material according to the first embodiment, the ratio of the amount of the hydride to the amount of X may be greater than 0 and less than or equal to 2.0. For example, the ratio of the amount of the hydride including $BH_4^-$ to the amount of I may be greater than 0 and less than or equal to 2.0.

In order to enhance the ion conductivity of the solid electrolyte material according to the first embodiment, the hydride may include, for example, a boron atom. Such a solid electrolyte material has improved lithium ion conductivity.

The hydride including a boron atom may include, for example, at least one selected from the group consisting of a borohydride compound including $BH_4^-$ and a carborane. An example of the carborane is $C_2B_{10}H_{12}$. Such a solid electrolyte material has more improved lithium ion conductivity.

In order to further improve ion conductivity, the hydride may include a borohydride compound including $BH_4^-$. The hydride may be a borohydride compound including $BH_4^-$.

The hydride need not include boron. In order to improve the ion conductivity of the solid electrolyte material according to the first embodiment, the hydride may include, for example, a nitrogen atom. Examples of the hydride including a nitrogen atom are an amidide or an imidide. The amidide may be, for example, $LiNH_2$. The imidide may be, for example, $Li_2NH$.

In order to more improve the ion conductivity of the solid electrolyte material, X may include I. X may be I.

The solid electrolyte material according to the first embodiment may be a composite material including LaOX and a hydride. Such a solid electrolyte material has more improved ion conductivity.

The solid electrolyte material according to the first embodiment may be a material represented by the following formula (1). That is, the solid electrolyte material according to the first embodiment may be a composite material including LaOX and lithium borohydride ($LiBH_4$) as the hydride.

$$1.0LaOX + aLiX + bLiBH_4 \qquad (1)$$

Here, $0 \leq a \leq 3.0$ and $0 < b \leq 3.0$ are satisfied.

The solid electrolyte material represented by the formula (1) has improved lithium ion conductivity.

In the solid electrolyte material represented by the formula (1), it is inferred that $Li^+$ constituting LiX is attracted to LaOX, and the $Li^+$ conducts, that is, $Li^+$ conducts in the interface between LiX and LaOX. In the solid electrolyte material represented by the formula (1), $LiBH_4$ is also included as a hydride. $LiBH_4$ interacts with $Li^+$ weaker than X. That is, $Li^+$ constituting $LiBH_4$ is more easily attracted to the LaOX side. Consequently, it is inferred that the solid electrolyte material represented by the formula (1) including $LiBH_4$ can improve the lithium ion conductivity.

In order to more improve the ion conductivity of the solid electrolyte material, in the formula (1), $0 \leq a \leq 2.0$ and $0 < b \leq 2.0$ may be satisfied.

In order to further improve the ion conductivity of the solid electrolyte material, in the formula (1), $0.4 \leq b \leq 2.0$ may be satisfied.

In order to further improve the ion conductivity of the solid electrolyte material, in the formula (1), $0 \leq a \leq 1.2$ and $0.8 \leq b \leq 2.0$ may be satisfied.

In order to further improve the ion conductivity of the solid electrolyte material, in the formula (1), $a < b$ may be satisfied.

The upper limit and lower limit of the range of "a" in the formula (1) may be prescribed by an arbitrary combination of numerical values selected from the group consisting of 0, 0.4, 0.8, 1.2, 1.6, and 2.0.

The upper limit and lower limit of the range of "b" in the formula (1) may be prescribed by an arbitrary combination of numerical values selected from the group consisting of 0.4, 0.8, 1.0, 1.2, 1.6, and 2.0.

In order to further improve the ion conductivity of the solid electrolyte material, in the formula (1), X may be I.

The solid electrolyte material according to the first embodiment may be crystalline or amorphous.

The shape of the solid electrolyte material according to the first embodiment is not limited. Examples of the shape are needle, spherical, and oval spherical shapes. The solid electrolyte material according to the first embodiment may be a particle. The solid electrolyte material according to the first embodiment may have a pellet or planar shape.

When the shape of the solid electrolyte material according to the first embodiment is a particulate shape (e.g., spherical), the solid electrolyte material may have a median diameter of greater than or equal to 0.1 μm and less than or equal to 100 μm or a median diameter of greater than or equal to 0.5 μm and less than or equal to 10 μm. Consequently, the solid electrolyte material according to the first embodiment and another material can be well dispersed.

The median diameter of particles means the particle diameter (d50) at the accumulated volume of 50% in a volume-based particle size distribution. The volume-based particle size distribution can be measured with a laser diffraction measurement apparatus or an image analyzer.

<Method for manufacturing solid electrolyte material>

The solid electrolyte material according to the first embodiment can be manufactured by the following method.

Raw material powders are provided so as to give a target composition.

As an example, when the composition ratio of a target solid electrolyte material is $1.0LaOI \cdot 1.6LiI \cdot 0.4LiBH_4$, a $Li_2O$ raw material powder, a $LiBH_4$ raw material powder, a $La_2O_3$ raw material powder, and a $LaI_3$ raw material powder are mixed at a molar ratio of 12 : 6 : 1 : 13. The raw material powders may be mixed at a molar ratio adjusted in advance such that a composition change which may occur during the synthesis process is offset.

For example, raw material powders are mechanochemically reacted (i.e., using a mechanochemical method) with each other in a mixing apparatus such as a planetary ball mill to obtain a reaction product.

The solid electrolyte material according to the first embodiment is obtained by such a method.

The composition of the solid electrolyte material can be determined by, for example, ICP emission spectrometry, ion chromatography, an inert gas fusion-infrared absorbing method, or an electron probe micro analyzer (EPMA) method. For example, the compositions of Li and La are determined by ICP emission spectrometry, the composition of I is determined by ion chromatography, and O can be measured by an inert gas fusion-infrared absorbing method. The hydride can be analyzed and the quantitative ratio can be evaluated by, for example, EPMA or X-ray photoelectron spectroscopy (XPS).

(Second embodiment)

A second embodiment of the present disclosure will now be described. The matters described in the first embodiment may be omitted.

In the second embodiment, a battery using the solid electrolyte material according to the first embodiment will be described.

The battery according to the second embodiment includes a positive electrode, a negative electrode, and an electrolyte layer. The electrolyte layer is disposed between the positive electrode and the negative electrode. At least one selected from the group consisting of the positive electrode, the electrolyte layer, and the negative electrode contains the solid electrolyte material according to the first embodiment.

The battery according to the second embodiment contains the solid electrolyte material according to the first embodiment and therefore has excellent charge and discharge characteristics. The battery may be an all-solid-state battery.

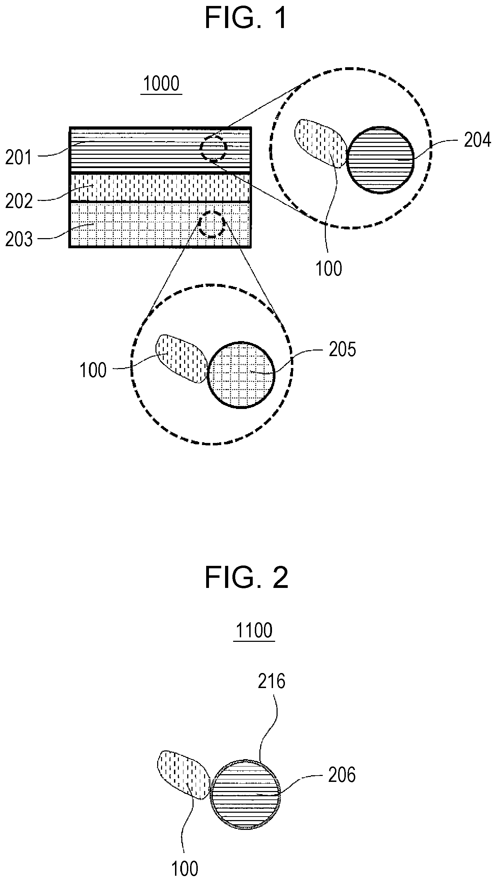

Fig. 1 shows a cross-sectional view of a battery 1000 according to the second embodiment.

The battery 1000 according to the second embodiment includes a positive electrode 201, an electrolyte layer 202, and a negative electrode 203. The electrolyte layer 202 is disposed between the positive electrode 201 and the negative electrode 203.

The positive electrode 201 contains a positive electrode active material particle 204 and a solid electrolyte particle 100.

The electrolyte layer 202 contains an electrolyte material. The electrolyte material is, for example, a solid electrolyte material.

The negative electrode 203 contains a negative electrode active material particle 205 and a solid electrolyte particle 100.

The solid electrolyte particle 100 includes the solid electrolyte material according to the first embodiment. The solid electrolyte particle 100 may be a particle including the solid electrolyte material according to the first embodiment as a main component. The particle including the solid electrolyte material according to the first embodiment as a main component means a particle in which the component with the highest molar ratio is the solid electrolyte material according to the first embodiment. The solid electrolyte particle 100 may be a particle consisting of the solid electrolyte material according to the first embodiment.

The solid electrolyte particle 100 may have a median diameter of greater than or equal to 0.1 $\mu$m and less than or equal to 100 $\mu$m or a median diameter of greater than or equal to 0.5 $\mu$m and less than or equal to 10 $\mu$m. In such a case, the solid electrolyte particle 100 has higher ion conductivity.

The positive electrode 201 contains a material that can occlude and release metal ions such as lithium ions. The positive electrode 201 contains, for example, a positive electrode active material (for example, the positive electrode active material particle 204).

Examples of the positive electrode active material are a lithium-containing transition metal oxide, a transition metal fluoride, a polyanionic material, a fluorinated polyanionic material, a transition metal sulfide, a transition metal oxyfluoride, a transition metal oxysulfide, and a transition metal oxynitride. Examples of the lithium-containing transition metal oxide are $LiNi_{1-d-f}Co_dAl_fO_2$ (here, $0 < d$, $0 < f$, and $0 < (d + f) < 1$) and $LiCoO_2$.

From the viewpoint of the cost and safety of the battery 1000, lithium phosphate may be used as a positive electrode active material.

The positive electrode 201 may contain a transition metal oxyfluoride as a positive electrode active material, in addition to the solid electrolyte material according to the first embodiment. The solid electrolyte material according to the first embodiment, even if it is fluorinated by the transition metal oxyfluoride, hardly forms a resistive layer. As a result, the battery 1000 has high charge and discharge efficiency.

The transition metal oxyfluoride contains oxygen and fluorine. As an example, the transition metal oxyfluoride may be a compound represented by $Li_pMe'_qO_mF_n$, where Me' is at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, and mathematical expressions: $0.5 \leq p \leq 1.5$, $0.5 \leq q \leq 1.0$, $1 \leq m < 2$, and $0 < n \leq 1$ are satisfied. An example of such a transition metal oxyfluoride is $Li_{1.05}(Ni_{0.35}Co_{0.35}Mn_{0.3})_{0.95}O_{1.9}F_{0.1}$.

The positive electrode active material particle 204 may have a median diameter of greater than or equal to 0.1 $\mu$m and less than or equal to 100 $\mu$m. When the positive electrode active material particle 204 has a median diameter of greater than or equal to 0.1 $\mu$m, the positive electrode active material particle 204 and the solid electrolyte particle 100 can be well dispersed in the positive electrode 201. Consequently, the charge and discharge characteristics of the battery are improved. When the positive electrode active material particle 204 has a median diameter of less than or equal to 100 $\mu$m, the lithium diffusion speed in the positive electrode active material particle 204 is improved. Consequently, the battery can operate at high output.

The positive electrode active material particle 204 may have a median diameter larger than that of the solid electrolyte particle 100. Consequently, the positive electrode active material particle 204 and the solid electrolyte particle 100 can be well dispersed.

In order to increase the energy density and output of the battery, in the positive electrode 201, the ratio of the volume of the positive electrode active material particle 204 to the sum of the volume of the positive electrode active material particle 204 and the volume of the solid electrolyte particle 100 may be greater than or equal to 0.30 and less than or equal to 0.95.

Fig. 2 shows a cross-sectional view of an electrode material 1100 according to the second embodiment. The electrode material 1100 is included in, for example, the positive electrode 201. In order to prevent the solid electrolyte particle 100 from reacting with a positive electrode active material (i.e., electrode active material particle 206), a covering layer 216 may be formed on the surface of the electrode active material particle 206. Consequently, it is possible to suppress the increase in the reaction overpotential of the battery. Examples of the covering material included in the covering layer 216 are a sulfide solid electrolyte, an oxide solid electrolyte, and a halide solid electrolyte. The covering material may be lithium niobate which has excellent stability even at high potential.

The positive electrode 201 may be composed of a first positive electrode layer containing a first positive electrode active material and a second positive electrode layer containing a second positive electrode active material. Here, the second positive electrode layer is disposed between the first positive electrode layer and the electrolyte layer 202. The first positive electrode layer and the second positive electrode layer contain the solid electrolyte material according to the first embodiment, and a covering layer may be formed on the surface of the second positive electrode active material. According to the configuration above, it is possible to suppress the oxidation of the solid electrolyte material according to the first embodiment included in the electrolyte layer 202 due to the second positive electrode active material. As a result, the battery has a high charging capacity. Examples of the covering material included in the covering layer 216 are a sulfide solid electrolyte, an oxide solid electrolyte, a polymer solid electrolyte, and a halide solid electrolyte. The first positive electrode active material may be the same material as the second positive electrode active material or may be a different material from the second positive electrode active material.

In order to increase the energy density and output of the battery, the positive electrode 201 may have a thickness of greater than or equal to 10 $\mu$m and less than or equal to 500 $\mu$m.

The electrolyte layer 202 contains an electrolyte material. The electrolyte material is, for example, a solid electrolyte material. The electrolyte layer 202 may be a solid electrolyte layer. The electrolyte layer 202 may contain the solid electrolyte material according to the first embodiment. The electrolyte layer 202 may consist of the solid electrolyte material according to the first embodiment only.

Hereinafter, the solid electrolyte material according to the first embodiment is referred to as a first solid electrolyte material, and the solid electrolyte material that is different from the solid electrolyte material according to the first embodiment is referred to as a second solid electrolyte material.

The electrolyte layer 202 may contain the second solid electrolyte material. The electrolyte layer 202 may consist of the second solid electrolyte material only.

The electrolyte layer 202 may contain not only the first solid electrolyte material but also the second solid electrolyte material. The first solid electrolyte material and the second solid electrolyte material may be uniformly dispersed in the electrolyte layer 202.

The electrolyte layer 202 may have a thickness of greater than or equal to 1 $\mu$m and less than or equal to 100 $\mu$m. When the electrolyte layer 202 has a thickness of greater than or equal to 1 $\mu$m, the positive electrode 201 and the negative electrode 203 are less likely to be short-circuited. When the electrolyte layer 202 has a thickness of less than or equal to 100 $\mu$m, the battery can operate at high output.

Another electrolyte layer (i.e., second electrolyte layer) may be further provided between the electrolyte layer 202 and the negative electrode 203. For example, when the electrolyte layer 202 includes the first solid electrolyte material, the second electrolyte layer may be constituted of another solid electrolyte material that is electrochemically more stable than the first solid electrolyte material. Specifically, the reduction potential of the solid electrolyte material constituting the second electrolyte layer may be lower than that of the first solid electrolyte material. Consequently, the first solid electrolyte material can be used without being reduced. As a result, the charge and discharge efficiency of the battery can be improved.

The negative electrode 203 contains a material that can occlude and release metal ions such as lithium ions. The negative electrode 203 contains, for example, a negative electrode active material (for example, the negative electrode active material particle 205).

Examples of the negative electrode active material are a metal material, a carbon material, an oxide, a nitride, a tin compound, and a silicon compound. The metal material may be a single metal or an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of the capacity density, suitable examples of the negative electrode active material are silicon (i.e., Si), tin (i.e., Sn), a silicon compound, and a tin compound.

The negative electrode active material may be selected based on the reduction resistance of the solid electrolyte material included in the negative electrode 203. When the negative electrode 203 contains the solid electrolyte material according to the first embodiment, a material that can occlude and release lithium ions at greater than or equal to 0 V against lithium may be used as the negative electrode active material. When the negative electrode active material is such a material, it is possible to suppress the reduction of the first solid electrolyte material included in the negative electrode 203. As a result, the battery has high charge and discharge efficiency. Examples of the material are titanium oxide, an indium metal, and a lithium alloy. Examples of the titanium oxide are $Li_4Ti_5O_{12}$, $LiTi_2O_4$, and $TiO_2$.

The negative electrode active material particle 205 may have a median diameter of greater than or equal to 0.1 $\mu$m and less than or equal to 100 $\mu$m. When the negative electrode active material particle 205 has a median diameter of greater than or equal to 0.1 $\mu$m, the negative electrode active material particle 205 and the solid electrolyte particle 100 can be well dispersed in the negative electrode 203. Consequently, the charge and discharge characteristics of the battery are improved. When the negative electrode active material particle 205 has a median diameter of less than or equal to 100 $\mu$m, the lithium diffusion speed in the negative electrode active material particle 205 is improved. Consequently, the battery can operate at high output.

The negative electrode active material particle 205 may have a median diameter larger than that of the solid electrolyte particle 100. Consequently, the negative electrode active material particle 205 and the solid electrolyte particle 100 can be well dispersed.

In order to increase the energy density and output of the battery, in the negative electrode 203, the ratio of the volume of the negative electrode active material particle 205 to the sum of the volume of the negative electrode active material particle 205 and the volume of the solid electrolyte particle 100 may be greater than or equal to 0.30 and less than or equal to 0.95.

The electrode material 1100 shown in Fig. 2 may be included in the negative electrode 202. In order to prevent the solid electrolyte particle 100 from reacting with the negative electrode active material (i.e., electrode active material particle 206), a covering layer 216 may be formed on the surface of the electrode active material particle 206. Consequently, the battery has high charge and discharge efficiency. Examples of the covering material included in the covering layer 216 are a sulfide solid electrolyte, an oxide solid electrolyte, a polymer solid electrolyte, and a halide solid electrolyte.

When the solid electrolyte particle 100 is the first solid electrolyte material, the covering material may be a sulfide solid electrolyte or a polymer solid electrolyte. An example of the sulfide solid electrolyte is $Li_2S-P_2S_5$. Examples of the polymer solid electrolyte are polyethylene oxide and a conjugated compound of a lithium salt. An example of such a polymer solid electrolyte is lithium bis(trifluoromethanesulfonyl)imide.

In order to increase the energy density and output of the battery, the negative electrode 203 may have a thickness of greater than or equal to 10 $\mu$m and less than or equal to 500 $\mu$m.

At least one selected from the group consisting of the positive electrode 201, the electrolyte layer 202, and the negative electrode 203 may contain a second solid electrolyte material for the purpose of enhancing the ion conductivity, chemical stability, and electrochemical stability. Examples of the second solid electrolyte material are a sulfide solid electrolyte, an oxide solid electrolyte, a halide solid electrolyte, and an organic polymer solid electrolyte.

In the present disclosure, the "sulfide solid electrolyte" means a solid electrolyte containing sulfur. The "oxide solid electrolyte" means a solid electrolyte containing oxygen. The oxide solid electrolyte may contain an anion (provided that sulfur and halogen elements are excluded) other than oxygen. The "halide solid electrolyte" means a solid electrolyte containing a halogen element and not containing sulfur. The halide solid electrolyte may contain not only a halogen element but also oxygen.

Examples of the sulfide solid electrolyte are $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$.

Examples of the oxide solid electrolyte are:

(i) an NASICON-type solid electrolyte, such as $LiTi_2(PO_4)_3$ or its element substitute;
(ii) a perovskite-type solid electrolyte, such as $(LaLi)TiO_3$;
(iii) an LISICON-type solid electrolyte, such as $Li_{14}ZnGe_4O_{16}$, $Li_4SiO_4$, $LiGeO_4$, or its element substitute;
(iv) a garnet-type solid electrolyte, such as $Li_7La_3Zr_2O_{12}$ or its element substitute; and
(v) $Li_3PO_4$ or its N-substitute.

Examples of the halide solid electrolyte material are compounds represented by $Li_aMe_bY_cZ_6$. Here, mathematical expressions: a + mb + 3c = 6 and c > 0 are satisfied; Me is at least one element selected from the group consisting of metal elements and metalloid elements excluding Li and Y; Z is at least one selected from the group consisting of F, Cl, Br, and I; and the value of m represents the valence of Me.

The "metalloid elements" are B, Si, Ge, As, Sb, and Te. The "metal elements" are all elements (excluding hydrogen) included in Groups 1 to 12 of the periodic table and all elements (excluding B, Si, Ge, As, Sb, Te, C, N, P, O, S, and Se) included in Groups 13 to 16 of the periodic table.

In order to enhance the ion conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb. As the halide solid electrolyte, for example, $Li_3YCl_6$ or $Li_3YBr_6$ is used.

When the electrolyte layer 202 contains the first solid electrolyte material, the negative electrode 203 may contain a sulfide solid electrolyte. Consequently, the sulfide solid electrolyte which is electrochemically stable against the negative electrode active material can suppress the contact between the first solid electrolyte material and the negative electrode active material. As a result, the internal resistance of the battery is reduced.

Examples of the organic polymer solid electrolyte are a polymer compound and a compound of a lithium salt. The polymer compound may have an ethylene oxide structure. A polymer compound having an ethylene oxide structure can contain a large amount of a lithium salt and therefore can further enhance the ion conductivity.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

At least one selected from the group consisting of the positive electrode 201, the electrolyte layer 202, and the negative electrode 203 may contain a nonaqueous electrolytic liquid, a gel electrolyte, or an ionic liquid for the purpose of facilitating the transfer of lithium ions and improving the output characteristics of the battery.

The nonaqueous electrolytic liquid contains a nonaqueous solvent and a lithium salt dissolved in the nonaqueous solvent.

Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is $\gamma$-butyrolactone. An example of the chain ester solvent is methyl acetate. Examples of the fluorine solvent are fluoroethylene carbonate, methyl fluoropropionate, fluorobenzene, fluoroethyl methyl carbonate, and fluorodimethylene carbonate. One nonaqueous solvent selected from these solvents may be used alone. Alternatively, a mixture of two or more nonaqueous solvents selected from these solvents may be used.

Examples of the lithium salt are $LiPF_6$, $LiBF_4$, $LiSbF_6$, $LiAsF_6$, LiSOsCFs, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used. The concentration of the lithium salt may be, for example, greater than or equal to 0.5 mol/L and less than or equal to 2 mol/L.

As the gel electrolyte, a polymer material impregnated with a nonaqueous electrolytic liquid can be used. Examples of the polymer material are polyethylene oxide, polyacrylonitrile, polyvinylidene fluoride, polymethyl methacrylate, and a polymer having an ethylene oxide bond.

Examples of the cation included in the ionic liquid are:

(i) an aliphatic chain quaternary salt, such as tetraalkylammonium or tetraalkylphosphonium;
(ii) an alicyclic ammonium, such as a pyrrolidinium, a morpholinium, an imidazolinium, a tetrahydropyrimidinium, a piperazinium, or a piperidinium; and
(iii) a nitrogen-containing heterocyclic aromatic cation, such as a pyridinium or an imidazolium.

Examples of the anion included in the ionic liquid are $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$.

The ionic liquid may contain a lithium salt.

At least one selected from the group consisting of the positive electrode 201, the electrolyte layer 202, and the negative electrode 203 may contain a binder for the purpose of improving the adhesion between individual particles.

Examples of the binder are polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. A copolymer can also be used as the binder. Examples of such a binder are copolymers of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from the above-mentioned materials may be used as the binder.

At least one selected from the positive electrode 201 and the negative electrode 203 may contain a conductive assistant for the purpose of enhancing the electron conductivity.

Examples of the conductive assistant are:

(i) graphite, such as natural graphite or artificial graphite;
(ii) carbon black, such as acetylene black or Ketjen black;
(iii) a conductive fiber, such as a carbon fiber or a metal fiber;
(iv) carbon fluoride;

(v) a metal powder, such as aluminum;

(vi) a conductive whisker, such as zinc oxide or potassium titanate;

(vii) a conductive metal oxide, such as titanium oxide; and

(viii) a conductive polymer compound, such as polyanion, polypyrrole, or polythiophene.

In order to reduce the cost, the conductive assistant of the above (i) or (ii) may be used.

Examples of the shape of the battery according to the second embodiment are coin type, cylindrical type, square type, sheet type, button type, flat type, and laminated type.

The battery according to the second embodiment may be manufactured by, for example, providing a material for forming the positive electrode, a material for forming the electrolyte layer, and a material for forming the negative electrode and producing a layered product in which the positive electrode, the electrolyte layer, and the negative electrode are disposed in this order by a known method.

EXAMPLES

The present disclosure will now be described in more detail with reference to Examples and Comparative Examples.

(Example 1)

[Production of solid electrolyte material]

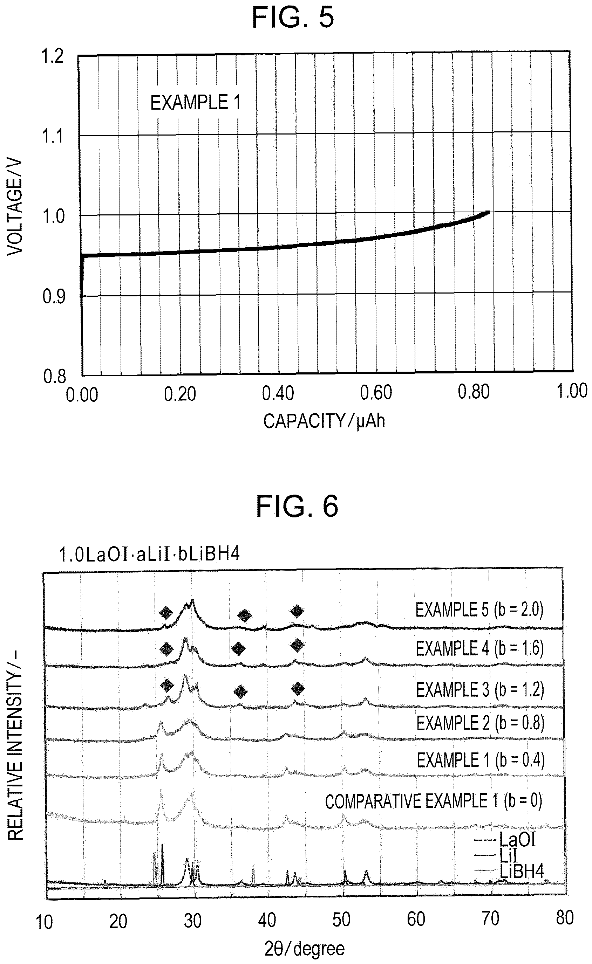

$Li_2O$, $LiBH_4$, $La_2O_3$, and $LaI_3$ were provided as raw material powders at a molar ratio of 12 : 6 : 1 : 13 in an argon atmosphere having a dew point of less than or equal to - 60°C (hereinafter, referred to as "dry argon atmosphere"). The mixture of these raw material powders was milled with a planetary ball mill at 500 rpm for 30 hours. Thus, a solid electrolyte material powder of Example 1 was obtained. The solid electrolyte material of Example 1 had a composition represented by $1.0LaOI \cdot 1.6LiI \cdot 0.4LiBH_4$. The composition here is a charge composition calculated from the charge amount. It was confirmed in advance that the composition of the obtained solid electrolyte material was almost the same as the charge composition in the manufacturing method used in the present example. In the present example, the solid electrolyte material was produced by milling treatment with a ball mill, and diffraction peaks showing the presence of LaOI, LiI, and $LiBH_4$ were observed in an X-ray diffraction pattern obtained by X-ray diffraction measurement of the obtained solid electrolyte material. Accordingly, it is inferred that the obtained solid electrolyte material of Example 1 is a composition material including LaOI, LiI, and $LiBH_4$. Fig. 6 is a graph showing an X-ray diffraction pattern of the solid electrolyte material of Example 1.

[Evaluation of ion conductivity]

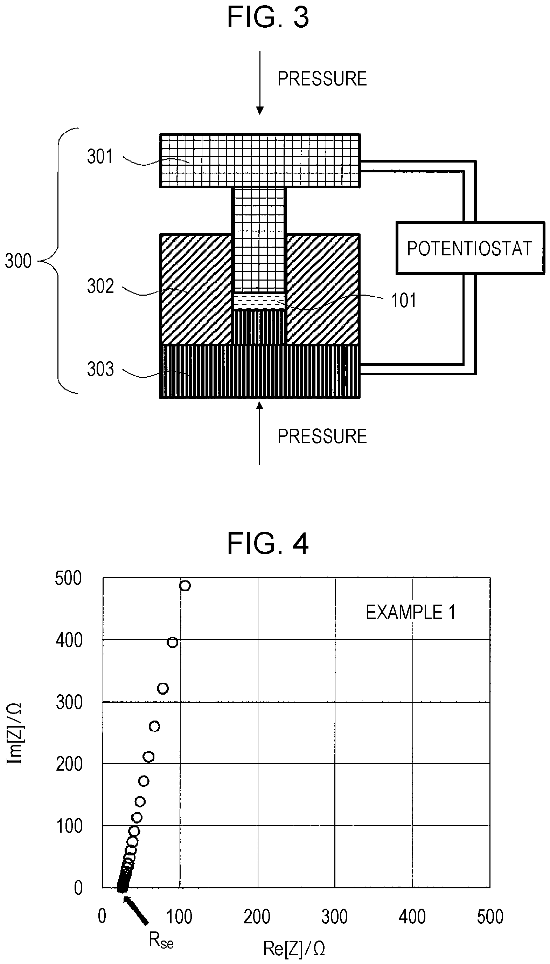

Fig. 3 shows a schematic diagram of a compression molding dies 300 used for evaluation of the ion conductivity of a solid electrolyte material.

The compression molding dies 300 included a punch upper part 301, a die 302, and a punch lower part 303. The die 302 was formed from insulating polycarbonate. The punch upper part 301 and the punch lower part 303 were both formed from electron-conductive stainless steel.

The ion conductivity of the solid electrolyte material of Example 1 was measured using the compression molding dies 300 shown in Fig. 3 by the following method.

The powder of the solid electrolyte material of Example 1 (i.e., the powder 101 of the solid electrolyte material in Fig. 3) was loaded inside the compression molding dies 300 in a dry atmosphere having a dew point of less than or equal to -30°C. A pressure of 400 MPa was applied to the solid electrolyte material of Example 1 inside the compression molding dies 300 using the punch upper part 301.

The punch upper part 301 and the punch lower part 303 were connected to a potentiostat (Bio-Logic Science Instruments Ltd, VMP-300) equipped with a frequency response analyzer, while applying the pressure. The punch upper part 301 was connected to the working electrode and the potential measurement terminal. The punch lower part 303 was connected to the counter electrode and the reference electrode. The ion conductivity of the solid electrolyte material of Example 1 was measured by an electrochemical impedance measurement method at room temperature.

Fig. 4 is a graph showing a cole-cole plot obtained by impedance measurement of the solid electrolyte material of Example 1.

In Fig. 4, the real value of impedance at the measurement point where the absolute value of the phase of the complex impedance was the smallest was regarded as the resistance value of the solid electrolyte material against ion conduction. Regarding the real value, see the arrow $R_{SE}$ shown in Fig. 4.

The ion conductivity was calculated using the resistance value based on the following mathematical expression (2):

$$\sigma = (R_{SE} \times S/t)^{-1} \quad (2).$$

Here, $\sigma$ represents ion conductivity; S represents the contact area of a solid electrolyte material with the punch upper part 301 (equal to the cross-sectional area of the hollow part of the die 302 in Fig. 3); $R_{SE}$ represents the resistance value of the solid electrolyte material in impedance measurement; and t represents the thickness of the solid electrolyte material (i.e., equal to the thickness of the layer formed from the powder 101 of the solid electrolyte material in Fig. 3) applied with a pressure. The ion conductivity of the solid electrolyte material of Example 1 measured at room temperature was $1.03 \times 10^{-4}$ S/cm.

[Production of battery]

The solid electrolyte material of Example 1, $Li_4Ti_5O_{12}$, and a carbon fiber (VGCF) were provided at a mass ratio of 30 : 65 : 5 in a dry argon atmosphere. These materials were mixed in a mortar. Thus, a mixture was obtained. VGCF is a registered trademark of Resonac Corporation.

An argyrodite-type sulfide solid electrolyte $Li_6PS_5Cl$ (80 mg), the solid electrolyte material (20 mg) of Example 1, the above mixture (15 mg), and VGCF (2 mg) were stacked in this order in an insulating tube having an inner diameter of 9.5 mm. A pressure of 740 MPa was applied to this layered product to form a solid electrolyte layer and an electrode.

Subsequently, metal In foil, metal Li foil, and metal In foil were stacked in this order on the solid electrolyte layer. A pressure of 40 MPa was applied to this layered product to form a counter electrode.

Subsequently, a current collector formed from stainless steel was attached to the electrode and the counter electrode, and a current collecting lead was attached to the current collector.

Finally, the inside of the insulating tube was isolated from the outside atmosphere using an insulating ferrule to seal the inside of the tube. Thus, a battery was obtained as a charge and discharge test cell of Example 1.

[Charge and discharge test]

Fig. 4 is a graph showing the initial discharge characteristics of the battery of Example 1. The initial charge and discharge characteristics were measured by the following method.

The battery of Example 1 was disposed in a thermostat of 25°C.

The battery of Example 1 was charged at a current density of 17.1 $\mu A/cm^2$ until the voltage reached 0.58 V. The current density corresponds to 0.01 C rate.

Subsequently, the battery of Example 1 was discharged at a current density of 17.1 $\mu A/cm^2$ until the voltage reached 1.0 V. The current density corresponds to 0.01 C rate.

As the result of the charge and discharge test, the battery of Example 1 had an initial discharge capacity of 829 $\mu Ah$.

(Examples 2 to 6 and Comparative Example 1)

In Examples 2 to 6, as raw material powders, $Li_2O$, $LiBH_4$, $LaI_3$, and $La_2O_3$ were provided at a molar ratio of (a/2) : b : ((1 + a)/3) : ((2 - a)/6)). The values of "a" and "b" are shown in Table 1.

In Comparative Example 1, as raw material powders, $Li_2O$ and $LaI_3$ were provided at a molar ratio of 1 : 1.

The solid electrolyte materials of Examples 2 to 5 and Comparative Example 1 were also subjected to X-ray diffraction measurement. Fig. 6 is a graph showing X-ray diffraction patterns of the solid electrolyte materials of Examples 2 to 5 and Comparative Example 1.

The ion conductivity of each of the solid electrolyte materials of Examples 2 to 6 and Comparative Example 1 was measured as in Example 1. The measurement results are shown in Table 1.

[Table 1]

| | Composition | a | b | X, Hydride | Ion conductivity [S/cm] |
|---|---|---|---|---|---|
| Example 1 | $1.0LaOI \cdot 1.6LiI \cdot 0.4LiBH_4$ | 1.6 | 0.4 | I, $BH_4$ | $3.13 \times 10^{-4}$ |
| Example 2 | $1.0LaOI \cdot 1.2LiI \cdot 0.8LiBH_4$ | 1.2 | 0.8 | I, $BH_4$ | $1.07 \times 10^{-3}$ |

(continued)

|  | Composition | a | b | X, Hydride | Ion conductivity [S/cm] |
|---|---|---|---|---|---|
| Example 3 | $1.0LaOI \cdot 0.8LiI \cdot 1.2LiBH_4$ | 0.8 | 1.2 | I, $BH_4$ | $1.29 \times 10^{-3}$ |
| Example 4 | $1.0LaOI \cdot 0.4LiI \cdot 1.6LiBH_4$ | 0.4 | 1.6 | I, $BH_4$ | $1.55 \times 10^{-3}$ |
| Example 5 | $1.0LaOI \cdot 2.0LiBH_4$ | 0 | 2.0 | I, $BH_4$ | $1.39 \times 10^{-3}$ |
| Example 6 | $1.0LaOI \cdot 2.0LiI \cdot 1.0LiBH_4$ | 2.0 | 1.0 | I, $BH_4$ | $8.65 \times 10^{-4}$ |
| Comparative Example 1 | $1.0LaOI \cdot 2.0LiI$ | 2.0 | 0 | I, - | $1.03 \times 10^{-4}$ |

(Consideration)

As obvious from Table 1, the solid electrolyte materials of Examples 1 to 6 had high lithium ion conductivity of greater than or equal to $3 \times 10^{-4}$ S/cm at room temperature.

As obvious by comparing Examples 1 to 6 with Comparative Example 1, the ion conductivity of a solid electrolyte material including a hydride (i.e., $LiBH_4$) was higher than that of a solid electrolyte material not including a hydride.

The battery of Example 1 was charged and discharged at room temperature.

Since the solid electrolyte materials of Examples 1 to 6 do not contain sulfur, hydrogen sulfide is not generated.

As described above, the solid electrolyte material according to the present disclosure can improve lithium ion conductivity while preventing the generation of hydrogen sulfide. The solid electrolyte material of the present disclosure is suitable for providing a battery that can be well charged and discharged.

Industrial Applicability

The solid electrolyte material and method for manufacturing it of the present disclosure are used in, for example, a battery (e.g., an all-solid-state lithium ion secondary battery).

Reference Signs List

100      solid electrolyte particle
101      powder of solid electrolyte material
201      positive electrode
202      electrolyte layer
203      negative electrode
204      positive electrode active material particle
205      negative electrode active material particle
300      compression molding dies
301      punch upper part
302      die
303      punch lower part
1000     battery
1100     electrode material

**Claims**

1. A solid electrolyte material comprising:

   Li, La, O, X, and a hydride, wherein
   X is at least one selected from the group consisting of F, Cl, Br, and I.

2. The solid electrolyte material according to claim 1, wherein
   a ratio of an amount of O to the total amount of X and the hydride is less than 1.

3. The solid electrolyte material according to claim 1 or 2, wherein
the hydride includes a boron atom.

4. The solid electrolyte material according to claim 3, wherein
the hydride includes at least one selected from the group consisting of a borohydride compound including $BH_4^-$ and a carborane.

5. The solid electrolyte material according to claim 4, wherein
the hydride includes a borohydride compound including $BH_4^-$.

6. The solid electrolyte material according to any one of claims 1 to 5, wherein X includes I.

7. The solid electrolyte material according to any one of claims 1 to 6, wherein
the solid electrolyte material is a composition material including LaOX and the hydride.

8. The solid electrolyte material according to any one of claims 1 to 7, wherein
the solid electrolyte material is represented by a following formula (1):

$$1.0LaOX \cdot aLiX \cdot bLiBH_4 \qquad \text{formula (1)}$$

here, $0 \leq a \leq 3.0$ and $0 < b \leq 3.0$ are satisfied.

9. The solid electrolyte material according to claim 8, wherein
in the formula (1), $0 \leq a \leq 2.0$ and $0 < b \leq 2.0$ are satisfied.

10. The solid electrolyte material according to claim 8 or 9, wherein
in the formula (1), $0.4 \leq b \leq 2.0$ is satisfied.

11. The solid electrolyte material according to any one of claims 8 to 10, wherein
in the formula (1), $0 \leq a \leq 1.2$ and $0.8 \leq b \leq 2.0$ are satisfied.

12. The solid electrolyte material according to any one of claims 8 to 11, wherein
in the formula (1), $a < b$ is satisfied.

13. The solid electrolyte material according to any one of claims 8 to 12, wherein
in the formula (1), X is I.

14. A battery comprising:

a positive electrode;
a negative electrode; and
an electrolyte layer disposed between the positive electrode and the negative electrode,
wherein
at least one selected from the group consisting of the positive electrode, the negative electrode, and the electrolyte layer contains the solid electrolyte material according to any one of claims 1 to 13.

## FIG. 1

## FIG. 2

# FIG. 3

# FIG. 4

# FIG. 5

# FIG. 6

## INTERNATIONAL SEARCH REPORT

International application No.

**PCT/JP2021/046672**

### A. CLASSIFICATION OF SUBJECT MATTER

*C01B 35/10*(2006.01)i; *H01M 4/62*(2006.01)i; *H01B 1/06*(2006.01)i; *H01B 1/08*(2006.01)i; *H01M 6/18*(2006.01)i; *H01M 10/0562*(2010.01)i; *H01M 10/0585*(2010.01)i
FI: H01B1/06 A; H01M10/0562; H01M10/0585; H01M4/62 Z; H01M6/18 A; H01M6/18 B; C01B35/10 Z; H01B1/08

According to International Patent Classification (IPC) or to both national classification and IPC

### B. FIELDS SEARCHED

Minimum documentation searched (classification system followed by classification symbols)

C01B35/10; H01M4/62; H01M10/0562; H01M10/0585; H01B1/06; H01B1/08; H01M6/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/212026 A1 (NGK SPARK PLUG CO., LTD.) 07 November 2019 (2019-11-07) paragraphs [0026]-[0030] | 1, 3-6, 14 |
| A | | 2, 7-13 |
| X | JP 2019-008930 A (SEIKO EPSON CORP.) 17 January 2019 (2019-01-17) paragraphs [0067]-[0079] | 1, 3-6, 14 |
| A | | 2, 7-13 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 January 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/046672**

| Patent document cited in search report | | | Publication date (day/month/year) | Patent family member(s) | | | Publication date (day/month/year) |
|---|---|---|---|---|---|---|---|
| WO | 2019/212026 | A1 | 07 November 2019 | US | 2021/0020985 | A1 | |
| | | | | paragraphs [0028]-[0032] | | | |
| | | | | EP | 3789346 | A1 | |
| | | | | CN | 112041272 | A | |
| | | | | KR 10-2020-0139214 | | A | |
| JP | 2019-008930 | A | 17 January 2019 | US | 2018/0375150 | A1 | |
| | | | | paragraphs [0081]-[0095] | | | |
| | | | | CN | 109119684 | A | |

Form PCT/ISA/210 (patent family annex) (January 2015)

17

**EP 4 324 791 A1**

**REFERENCES CITED IN THE DESCRIPTION**

**Patent documents cited in the description**

- WO 2020137043 A